# EUROPEAN PATENT SPECIFICATION

(11) **EP 2 054 609 B1**
(45) Date of publication and mention of the grant of the patent: **02.06.2010**
(21) Application number: 07830908.5
(22) Date of filing: 24.10.2007
(51) Int. Cl.: F02M 25/07, F02D 21/08, F02D 41/08, F02D 9/04

(54) **EXHAUST GAS RECIRCULATION APPARATUS FOR AN INTERNAL COMBUSTION ENGINE**
ABGASRÜCKFÜHRVORRICHTUNG FÜR EINE BRENNKRAFTMASCHINE
APPAREIL DE RECIRCULATION DES GAZ D'ÉCHAPPEMENT POUR UN MOTEUR À COMBUSTION INTERNE

(30) Priority: 25.10.2006 JP 2006289556
(43) Date of publication of application: 06.05.2009
(73) Proprietor: Toyota Jidosha Kabushiki Kaisha, Toyota-shi, Aichi 471-8571 (JP)
(72) Inventor: ONO, Tomoyuki, Toyota-shi Aichi 4718571 (JP)
(74) Representative: Intes, Didier Gérard André
(86) International application number: PCT/JP2007/071174
(87) International publication number: WO 2008/050900

(56) References cited:
- JP-A- 4 175 453
- JP-A- 10 047 112
- JP-A- 2002 021 625
- JP-A- 2002 030 963
- JP-A- 2002 276 405
- JP-A- 2005 127 247
- US-A- 4 281 631
- US-A- 4 433 666
- US-A1- 2006 137 665

## Description

### TECHNICAL FIELD

The present invention relates to an exhaust gas recirculation apparatus for an internal combustion engine.

### BACKGROUND ARTS

There has been known an exhaust gas recirculation apparatus for an internal combustion engine which includes a low pressure exhaust gas recirculation (EGR) passage that serves to take in, as a low pressure EGR gas, a part of an exhaust gas from an exhaust passage at a downstream side of a turbine of a turbocharger and return or recirculate the low pressure EGR gas to an intake passage at an upstream side of a compressor of the turbocharger, and a high pressure EGR passage that serves to take in, as a high pressure EGR gas, a part of the exhaust gas from the exhaust passage at an upstream side of the turbine and recirculate the high pressure EGR gas to the intake passage at a downstream side of the compressor.

In addition, in Japanese patent application laid-open No. 2004-150319, there is disclosed a technique in which when an internal combustion engine is in an operating state in which the engine rotational speed is in a low-medium speed range and the engine load is in a low-medium load range, a high pressure EGR gas is mainly recirculated from a high pressure EGR passage, and a low pressure EGR gas is auxiliarily recirculated from a low pressure EGR passage. In Japanese patent application laid-open No. 2002-030963, there is disclosed a technique in which when an idle operation is continued for a predetermined period of time or longer, an amount of EGR is decreased so as to avoid the deterioration of combustion in accordance with the reduction of fresh air due to an EGR operation. In Japanese patent application laid-open No. H10-047112, there is disclosed a technique in which when the temperature of an exhaust gas becomes lower than the temperature of a catalyst during an idle operation, an EGR valve is opened so as to raise the temperature of the catalyst, thereby suppressing hydrocarbon (HC) discharge in the catalyst. Further reference is made to JP 2005 127 247 and US 4,433,666.

### DISCLOSURE OF THE INVENTION

However, in case where an idle operation is continued while recirculating a low pressure EGR gas in an internal combustion engine, the temperature of the low pressure EGR gas recirculated from a low pressure EGR passage to an intake passage falls, and the temperature of intake air contained in the low pressure EGR gas also falls, so the temperature of combustion chambers in engine cylinders is lowered.

When the temperature of the combustion chambers becomes lower, the fuel injected in the cylinders of the internal combustion engine might not combust completely, and HC in the form of an unburnt component might be discharged from the internal combustion engine. In addition, the temperature of the exhaust gas discharged from the internal combustion engine falls, too, so the catalyst bed temperature of an exhaust gas purification catalyst arranged on an exhaust passage of the internal combustion engine might be lowered.

In view of the above, the object of the present invention is to provide a technique in an exhaust gas recirculation apparatus for an internal combustion engine, which is capable of suppressing a temperature fall of combustion chambers as well as troubles resulting therefrom even if an idle operation continues for a long period of time.

In the present invention, the following construction is adopted. That is, an exhaust gas recirculation apparatus for an internal combustion engine includes:
a turbocharger that has a turbine arranged on an exhaust passage of the internal combustion engine and a compressor arranged on an intake passage of the internal combustion engine;
a low pressure EGR passage that takes in a part of an exhaust gas from the exhaust passage at a location downstream of said turbine, and recirculates it to the intake passage at a location upstream of said compressor;
a high pressure EGR passage that takes in a part of the exhaust gas from the exhaust passage at a location upstream of said turbine and recirculates it to the intake passage at a location downstream of said compressor;
a low pressure EGR valve that is disposed on said low pressure EGR passage, and controls an amount of exhaust gas passing through said low pressure EGR passage;
a high pressure EGR valve that is disposed on said high pressure EGR passage, and controls an amount of exhaust gas passing through said high pressure EGR passage;
an idle operation continuation time counting unit that counts an idle operation continuation time of said internal combustion engine; and
a control unit that controls said low pressure EGR valve to a closing side and said high pressure EGR valve to an opening side when the idle operation continuation time calculated by said idle operation continuation time counting unit continues a first predetermined period of time or more.

Specifically, in the present invention, when the idle operation continuation time in which the low pressure EGR gas passing through the low pressure EGR passage and the high pressure EGR gas passing through the high pressure EGR passage are caused to recirculate continues for the first predetermined period of time or more, the low pressure EGR valve is controlled to the closing side, and the high pressure EGR valve is controlled to the opening side.

Here, the first predetermined time is an idle operation continuation time, for which or more if the idle operation is continued, the temperature of the combustion chambers will be lowered to such an extent as to cause the trouble that the recirculating low pressure EGR gas discharges HC from the internal combustion engine, and/or lowers the catalyst bed temperature of the exhaust gas purification catalyst.

As the idle operation continues while recirculating the low pressure EGR gas, the temperature of intake air containing therein the low pressure EGR gas is lowered, and hence the temperature of the combustion chambers of the internal combustion engine falls. In contrast to this, according to the construction of the present invention, the low pressure EGR valve is controlled to the closing side when the idle operation continuation time continues for the first predetermined period of time or more, so in the idle operation after the continuation thereof for the first predetermined period of time, the amount of the low pressure EGR gas is reduced, thereby making it possible to suppress the lowering of the temperature of the combustion chambers.

Therefore, it is possible to suppress incomplete combustion of fuel in the internal combustion engine resulting from the temperature fall of the combustion chambers, and hence it is possible to suppress the discharge of HC in the form of an unburnt component from the internal combustion engine. In addition, the lowering of the temperature of the exhaust gas discharged from the internal combustion engine resulting from the temperature fall of the combustion chambers can be suppressed, so it is possible to suppress the lowering of the catalyst bed temperature of the exhaust gas purification catalyst arranged on the exhaust passage of the internal combustion engine.

On the other hand, according to the construction of the present invention, when the idle operation continuation time continues for the first predetermined time or more, the low pressure EGR valve is controlled to the closing side, and at the same time the high pressure EGR valve is controlled to the opening side. As a result, a constant total amount of EGR gas can be ensured by increasing the high pressure EGR gas by an amount equal to a decreased amount of low pressure EGR gas. Therefore, even when the idle operation continuation time continues for the first predetermined time or more, the EGR operation can be continued, so it is possible to continuously obtain the effect of decreasing nitrogen oxides (NOx) due to the execution of the EGR operation. In addition, here, the high pressure EGR gas is a gas of a higher temperature as compared with the low pressure EGR gas, so the temperature of the combustion chambers is not lowered, unlike the aforementioned problem.

Preferably, said control unit controls said high pressure EGR valve to the closing side when said idle operation continuation time continues for a second predetermined period of time or more that is longer than said first predetermined period of time.

Here, the second predetermined period of time is an idle operation continuation time which is longer than the first period of time, and for which or more if the idle operation is continued, the temperature of the combustion chambers will be lowered to such an extent as to cause the trouble that the recirculating high pressure EGR gas discharges HC from the internal combustion engine, and/or lowers the catalyst bed temperature of the exhaust gas purification catalyst.

When the idle operation continuation time continues for a period of time longer than the first predetermined period of time, the temperature of the combustion chambers is lowered even not due to the factor of the low pressure EGR gas, but due to the factor of the high pressure EGR gas, so the temperature of the exhaust gas discharged from the internal combustion engine also falls. Thus, according to the construction of the present invention, said high pressure EGR valve is controlled to the closing side when said idle operation continuation time continues for said second predetermined period of time or more that is longer than said first predetermined period of time. As a result, the amount of high pressure EGR gas is reduced in the idle operation after the second predetermined period of time, so the exhaust gas having fallen in temperature is made not to be recirculated as a high pressure EGR gas, thereby making it possible to suppress the lowering of the temperature of the combustion chambers.

Therefore, it is possible to suppress the incomplete combustion of fuel in the internal combustion engine resulting from the lowering of the temperature of the combustion chambers, and hence it is possible to suppress the discharge of HC in the form of an unburnt component from the internal combustion engine. In addition, a temperature fall of the exhaust gas discharged from the internal combustion engine resulting from the lowering of the temperature of the combustion chambers can also be suppressed, so the catalyst bed temperature of the exhaust gas purification catalyst arranged on the exhaust passage of the internal combustion engine can be suppressed from being lowered.

Preferably, provision is made for a low pressure EGR gas temperature detection unit that detects the temperature of an exhaust gas passing through said low pressure EGR passage, wherein said control unit controls said low pressure EGR valve to the closing side in accordance with the lowering of the temperature of the exhaust gas passing through said low pressure EGR passage that is detected by said low pressure EGR gas temperature detection unit.

The main cause for lowering the temperature of the combustion chambers is that the temperature of the low pressure EGR gas in the intake air sucked into the internal combustion engine falls. Thus, according to the construction of the present invention, the low pressure EGR valve is controlled to the closing side in accordance with the lowering of the low pressure EGR gas temperature, so the amount of low pressure EGR gas is reduced in accordance with the lowering of the low pressure EGR gas temperature, thereby making it possible to suppress the temperature fall of the combustion chambers.

Preferably, provision is made for an ambient temperature detection unit that detects the temperature of ambient atmosphere, and said control unit controls said low pressure EGR valve to the closing side in accordance with the lowering of the ambient atmospheric temperature that is detected by said ambient temperature detection unit.

The main cause for lowering the temperature of the combustion chambers is the low pressure EGR gas of low temperature in the intake air sucked into the internal combustion engine. Thus, according to the construction of the present invention, the low pressure EGR valve is controlled to the closing side in accordance with the lowering of the ambient atmospheric temperature, so the amount of low pressure EGR gas of low temperature is reduced in accordance with the lowering of the temperature of the ambient atmosphere to be sucked, thereby making it possible to suppress the temperature fall of the combustion chambers.

Preferably, provision is made for an exhaust gas purification catalyst that is arranged on said exhaust passage at a location downstream of said turbine and upstream of a joint portion thereof with said low pressure EGR passage for purifying the exhaust gas, and a catalyst bed temperature detection unit that detects the catalyst bed temperature of said exhaust gas purification catalyst, wherein said control unit controls said low pressure EGR valve to the closing side in accordance with the lowering of the catalyst bed temperature of said exhaust gas purification catalyst that is detected by said catalyst bed temperature detection unit.

The main cause for lowering the temperature of the combustion chambers is the low pressure EGR gas of low temperature in the intake air sucked into the internal combustion engine. Thus, according to the construction of the present invention, the low pressure EGR valve is controlled to the closing side in accordance with the lowering of the catalyst bed temperature of the exhaust gas purification catalyst, the amount of low pressure EGR gas of low temperature is reduced in accordance with the lowering of the catalyst bed temperature of the exhaust gas purification catalyst, thereby making it possible to suppress the temperature fall of the combustion chambers.

According to the present invention, in the exhaust gas recirculation apparatus for an internal combustion engine, it is possible to suppress the lowering of the temperature of the combustion chambers even if the idle operation continuation time continues for a long period of time, and hence it is possible to suppress trouble resulting from the lowering of the temperature of the combustion chambers.

The above and other objects, features and advantages of the present invention will become more readily apparent to those skilled in the art from the following detailed description of preferred embodiments of the present invention taken in conjunction with the accompanying drawings.

### BRIEF DESCRIPTION OF THE DRAWINGS

Fig. 1 is a view showing the schematic construction of an internal combustion engine with intake and exhaust systems according to an embodiment of the present invention.
Fig. 2 is a flow chart showing a control routine for a low pressure EGR valve and a high pressure EGR valve at the time of continuation of an idle operation according to a first embodiment of the present invention.
Fig. 3 is a flow chart showing a control routine for a low pressure EGR valve and a high pressure EGR valve at the time of continuation of an idle operation according to a second embodiment of the present invention.
Fig. 4 is a view showing a map of the temperature of a low pressure EGR gas and the degree of opening of the low pressure EGR valve according to the second embodiment of the present invention.
Fig. 5 is a flow chart showing a control routine for a low pressure EGR valve and a high pressure EGR valve at the time of continuation of an idle operation according to a third embodiment of the present invention.
Fig. 6 is a view showing a map of the atmospheric temperature and the degree of opening of the low pressure EGR valve according to the third embodiment of the present invention.
Fig. 7 is a flow chart showing a control routine for a low pressure EGR valve and a high pressure EGR valve at the time of continuation of an idle operation according to a fourth embodiment of the present invention.
Fig. 8 is a view showing a map of the catalyst bed temperature of a filter and the degree of opening of the low pressure EGR valve according to the fourth embodiment of the present invention.

### DESCRIPTION OF THE PREFERRED EMBODIMENT

Hereinafter, reference will be made to specific embodiments of the present invention.

### < First Embodiment >

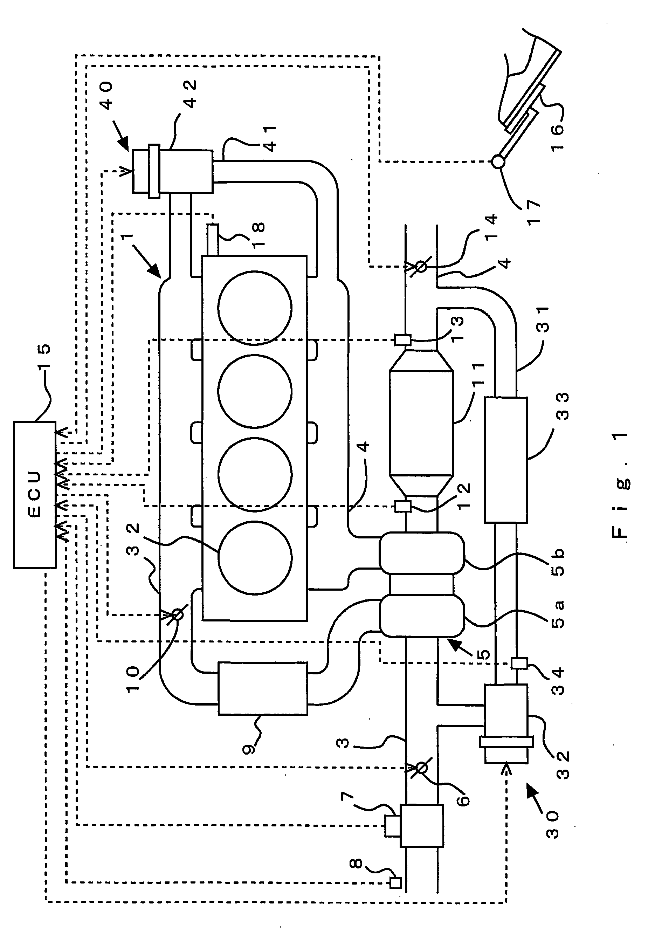

Fig. 1 shows the schematic construction of an internal combustion engine with an intake system and an exhaust system to which an exhaust gas recirculation apparatus for an internal combustion engine according to an embodiment of the present invention is applied.

An internal combustion engine 1 illustrated in Fig. 1 is a water-cooled four-stroke cycle diesel engine with four cylinders 2, each of which has a combustion chamber defined therein. The internal combustion engine 1 is installed on a vehicle. An intake passage 3 and an exhaust passage 4 are connected with the internal combustion engine 1.

A compressor housing 5a of a turbocharger 5, which is operated by the energy of an exhaust gas as a drive source, is arranged in an intermediate portion of the intake passage 3 connected with the internal combustion engine 1. Also, a first throttle valve 6, which serves to adjust the flow rate of intake air passing through the intake passage 3, is arranged on the intake passage 3 at a location upstream of the compressor housing 5a. The first throttle valve 6 is opened and closed by an electric actuator (not shown). An air flow meter 7 for outputting a signal corresponding to the flow rate of intake air (fresh air) passing through the intake passage 3 is arranged on the intake passage 3 at a location upstream of the first throttle valve 6. The amount of intake air (the amount of fresh air) in the internal combustion engine 1 is measured by the air flow meter 7. An ambient temperature sensor 8 for detecting the temperature of atmospheric or ambient air is arranged in the vicinity of a fresh air intake opening of the intake passage 3 into which ambient air in the form of fresh air at an upstream side of the air flow meter 7 is taken. Here, note that the ambient temperature sensor 8 in this embodiment corresponds to an ambient temperature detection unit in the present invention.

An intercooler 9 for performing heat exchange between intake air and outside air is arranged on the intake passage 3 at a location downstream of the compressor housing 5a. Also, a second throttle valve 10 for adjusting the flow rate of intake air passing through the intake passage 3 is arranged on the intake passage 3 at a location downstream of the intercooler 9. The second throttle valve 10 is opened and closed by means of an electric actuator (not shown).

On the other hand, a turbine housing 5b of the turbocharger 5 is arranged on an intermediate portion of the exhaust passage 4 connected with the internal combustion engine 1. In addition, a particulate filter 11 (hereinafter referred to simply as a filter) is arranged on the exhaust passage 4 at a location downstream of the turbine housing 5b. A NOx storage reduction catalyst (hereinafter referred to as a NOx catalyst) is carried on the filter 12. The filter 11 serves to collect particulate matter (PM) in the exhaust gas. When the oxygen concentration of the exhaust gas flowing into the NOx catalyst is high, the NOx catalyst stores NOx in the exhaust gas, whereas when the oxygen concentration of the exhaust gas flowing into the NOx catalyst is low, the NOx catalyst reduces the NOx stored in the NOx catalyst therefrom. At that time, if reducing components such as hydrocarbon (HC), carbon monoxide (CO) or the like exist in the exhaust gas, the NOx removed from the NOx catalyst is reduced by the reducing components. Here, note that an oxidation catalyst or a three-way catalyst, instead of the NOx catalyst, may be carried on the filter 11. The filter 11 in this embodiment corresponds to an exhaust gas purification catalyst in the present invention.

A first exhaust gas temperature sensor 12 and a second exhaust gas temperature sensor 13 for detecting the individual temperatures of the exhaust gas at its different locations, respectively, are arranged on the exhaust passage 4 at immediately upstream and downstream sides of the filter 11, respectively.

An exhaust gas throttle valve 14 for adjusting the flow rate of the exhaust gas passing through the exhaust passage 4 is arranged on the exhaust passage 4 at a location downstream of the filter 11. The exhaust gas throttle valve 14 is opened and closed by means of an electric actuator (not shown).

In addition, a low pressure EGR device 30 for returning (recirculating) a part of the exhaust gas passing through the exhaust passage 4 to the intake passage 3 at low pressure is mounted on the internal combustion engine 1. The low pressure EGR device 30 is constructed to include a low pressure EGR passage 31, a low pressure EGR valve 32, and a low pressure EGR cooler 33.

The low pressure EGR passage 31 serves to connect between a portion of the exhaust passage 4 which is downstream of the filter 11 and upstream of the exhaust gas throttle valve 14, and a portion of the intake passage 3 which is upstream of the compressor housing 5a and downstream of the first throttle valve 6. The exhaust gas is sent to the internal combustion engine 1 through the low pressure EGR passage 31 at low pressure, and in this description, the exhaust gas recirculating through the low pressure EGR passage 31 is called a low pressure EGR gas.

A low pressure EGR gas temperature sensor 34 for detecting the temperature of the low pressure EGR gas is arranged on the low pressure EGR passage 31. Here, note that the low pressure EGR gas temperature sensor 34 in this embodiment corresponds to a low pressure EGR gas temperature detection unit in the present invention.

In addition, the low pressure EGR valve 32 serves to control the amount of the low pressure EGR gas flowing through the low pressure EGR passage 31 by adjusting the passage sectional area of the low pressure EGR passage 31. Further, the low pressure EGR cooler 33 lowers the temperature of the low pressure EGR gas by performing heat exchange between the low pressure EGR gas passing through the low pressure EGR cooler 33 and the cooling water in the internal combustion engine 1.

Also, a high pressure EGR device 40 for returning or recirculating a part of the exhaust gas passing through the exhaust passage 4 to the intake passage 3 at high pressure is mounted on the internal combustion engine 1. The high pressure EGR device 40 is constructed to include a high pressure EGR passage 41 and a high pressure EGR valve 42.

The high pressure EGR passage 41 serves to connect between a portion of the exhaust passage 4 which is upstream of the turbine housing 5b and a portion of the intake passage 3 which is downstream of the compressor housing 5a. The exhaust gas is sent to the internal combustion engine 1 at high pressure through the high pressure EGR passage 41, and in this description, the exhaust gas recirculating through the high pressure EGR passage 41 is called a high pressure EGR gas.

In addition, the high pressure EGR valve 42 serves to control the amount of the high pressure EGR gas flowing through the high pressure EGR passage 41 by adjusting the passage sectional area of the high pressure EGR passage 41.

An ECU 15 in the form of an electronic control unit for controlling the internal combustion engine 1 is provided in conjunction with the internal combustion engine 1 as constructed in the above-described manner. This ECU 15 serves to control the operating state of the internal combustion engine 1 in accordance with the operating condition of the internal combustion engine 1 and driver's requirements.

The ambient temperature sensor 8, the low pressure EGR gas temperature sensor 34, the first and second exhaust gas temperature sensors 12, 13, an accelerator opening sensor 17 capable of detecting an engine load by outputting an electric signal corresponding to an amount of depression of the accelerator pedal 16 operated by the driver, and a crank position sensor 18 for detecting an engine rotational speed, are connected to the ECU 15 through electrical wiring, so that the output signals of these various kinds of sensors are input to the ECU 15.

On the other hand, the individual actuators for the first throttle valve 6, the second throttle valve 10, the exhaust gas throttle valve 14, the low pressure EGR valve 32 and the high pressure EGR valve 42 are also connected to the ECU 15 through electrical wiring, so that these valves are controlled by means of the ECU 15.

In this embodiment, the amount of high pressure EGR gas is controlled by using the high pressure EGR valve 42 while controlling the amount of low pressure EGR gas by using the low pressure EGR valve 32 in accordance with the operating state of the internal combustion engine 1. In this manner, a so-called EGR operation in which the internal combustion engine 1 is operated with the low pressure EGR gas and the high pressure EGR gas being contained in the intake air sucked into the internal combustion engine 1 is carried out, whereby the oxygen concentration of intake air is decreased to lower the combustion temperature and the combustion speed thereof, thus making it possible to exhibit an advantageous effect of reducing the amount of NOx generated at the time of combustion.

However, in case where an idle operation is started, too, the low pressure EGR gas and the high pressure EGR gas are recirculated. Here, when the idle operation is continued with the low pressure EGR gas and the high pressure EGR gas being recirculated, the temperature of the low pressure EGR gas recirculated from the low pressure EGR passage 31 to the intake passage 3 is lowered, and hence the temperature of intake air with the low pressure EGR gas being contained therein is also lowered, as a result of which the temperature of the combustion chamber formed in each cylinder 2 is reduced.

In this manner, when the temperature of the combustion chamber in each cylinder 2 becomes lower, the fuel injected into the cylinders 2 of the internal combustion engine 1 might not combust or burn completely, and HC in the form of an unburnt component might be discharged from the internal combustion engine. Also, the temperature of the exhaust gas discharged from the internal combustion engine 1 falls, too, so the catalyst bed temperature of the filter 11 arranged on the exhaust passage 4 of the internal combustion engine 1 might be lowered.

Thus, in this embodiment, when the idle operation continuation time in which the low pressure EGR gas and the high pressure EGR gas are recirculated continues for a period of time T1 or more, the low pressure EGR valve 32 is controlled to the closing side, and the high pressure EGR valve 42 is controlled to the opening side.

Accordingly, according to this embodiment, the low pressure EGR valve 32 is controlled to the closing side when the idle operation continuation time continues for the period of time T1 or more, so in the idle operation after the continuation thereof for the period of time T1, the amount of low pressure EGR gas is reduced, thereby making it possible to suppress the lowering of the temperature of the combustion chambers.

Therefore, the incomplete combustion of fuel in the internal combustion engine 1 resulting from the lowering of the temperature of the combustion chambers can be suppressed, whereby it is possible to suppress the discharge of HC in the form of an unburnt component from the internal combustion engine 1. In addition, the lowering of the temperature of the exhaust gas discharged from the internal combustion engine 1 resulting from the fall of the temperature of the combustion chambers can be suppressed, so it is possible to suppress the lowering of the catalyst bed temperature of the filter 11 arranged on the exhaust passage 4 of the internal combustion engine 1.

On the other hand, according to this embodiment, when the idle operation continuation time continues for the period of time T1 or more, the low pressure EGR valve 32 is controlled to the closing side, and at the same time, the high pressure EGR valve 42 is controlled to the opening side. As a result, a constant total amount of EGR gas can be ensured by increasing the high pressure EGR gas by an amount equal to a decreased amount of low pressure EGR gas. Thus, even when the idle operation continuation time continues for the period of time T1 or more, the EGR operation can be continued, so the effect of reducing the NOx due to the EGR operation can be continuously obtained. In addition, here, the high pressure EGR gas is a gas of a higher temperature as compared with the low pressure EGR gas, so the temperature of the combustion chambers is not lowered, unlike the aforementioned problem.

On the other hand, when the idle operation continuation time continues for a period of time longer than the time T1, the temperature of the combustion chambers is lowered even not due to the factor of the low pressure EGR gas, but due to the factor of the high pressure EGR gas, so the temperature of the exhaust gas discharged from the internal combustion engine 1 also falls.

Accordingly, in this embodiment, when the idle operation continuation time continues for a period of time T2 or more which is longer than the time T1, the high pressure EGR valve 42 is controlled to the closing side.

Thus, according to this embodiment, when the idle operation continuation time continues for the period of time T2 or more, the high pressure EGR valve 42 is controlled to the closing side. As a result, the amount of high pressure EGR gas is reduced in the idle operation after the period of time T2, and the exhaust gas having fallen in temperature is not recirculated as a high pressure EGR gas, thereby making it possible to suppress the reduction in the temperature of the combustion chambers.

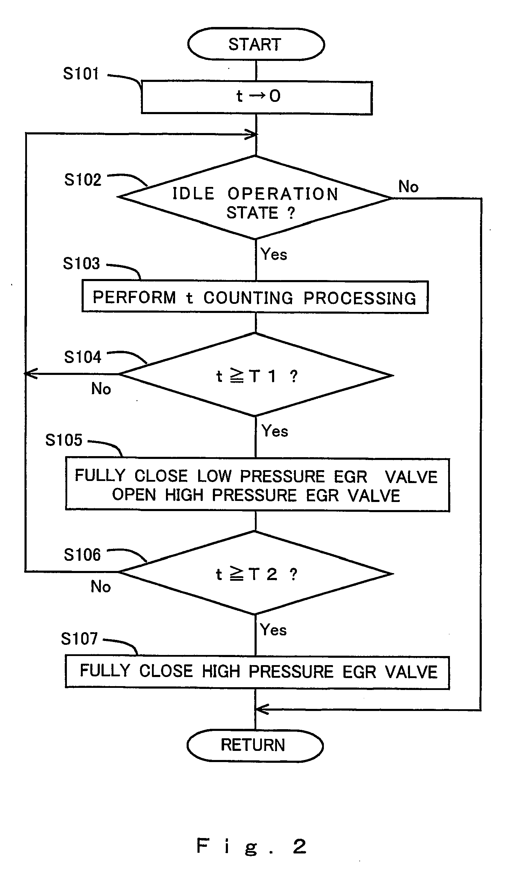

Now, reference will be made to a control flow for the low pressure EGR valve 32 and the high pressure EGR valve 42 at the time of continuation of an idle operation according to the first embodiment of the present invention. Fig. 2 is a flow chart that shows a control routine for the low pressure EGR valve 32 and the high pressure EGR valve 42 during continuation of the idle operation according to this embodiment. This routine is repeatedly carried out at every predetermined time interval. In addition, this routine corresponds to a control unit of the present invention.

In step S101, the ECU 15 sets the idle operation continuation time t to 0 (t → 0).

Then, in step S102 shifted from step S101, the ECU 15 determines whether the internal combustion engine 1 is in an idle operating state. The determination as to whether the internal combustion engine 1 is in an idle operating state is made based on the engine rotational speed that is detected by the accelerator opening sensor 17, the engine load that is detected by the crank position sensor 18, etc.

When a negative determination is made in step S102, the ECU 15 once terminates the execution of this routine, whereas when a positive determination is made, the control flow shifts to step S103.

In step S103, the ECU 15 measures or counts the idle operation continuation time t. This step corresponds to an idle operation continuation time counting unit of the present invention.

In step S104 shifted from step S103, the ECU 15 determines whether the idle operation continuation time t continues for the period of time T1 or more (t ≧ T1 ?).

Here, the period of time T1 is an idle operation continuation time, for which or more if the idle operation is continued, the temperature of the combustion chambers will be lowered to such an extent as to cause the trouble that the recirculating low pressure EGR gas discharges HC from the internal combustion engine 1, and/or lowers the catalyst bed temperature of the filter 11, and it is a period of time determined in advance by experiments or the like. In other words, the period of time T1 is a first predetermined time of the present invention.

When a negative determination is made in step S104, the ECU 15 shifts to step S102, whereas when a positive determination is made, the ECU 15 shifts to step S105.

In step S105, the ECU 15 controls the low pressure EGR valve 32 into a fully closed state, and the high pressure EGR valve 42 to the opening side.

Here, an increased amount of opening to the opening side of the high pressure EGR valve 42 is an increased amount of opening that can increase the amount of high pressure EGR gas so as to supplement an amount of low pressure EGR gas that is decreased due to the full closure of the low pressure EGR valve 32.

By controlling the low pressure EGR valve 32 into the fully closed state, in the idle operation after the continuation thereof for the period of time T1, the amount of low pressure EGR gas is reduced, thereby making it possible to suppress the lowering of the temperature of the combustion chambers. In addition, by controlling the high pressure EGR valve 42 to the opening side, it is possible to increase the high pressure EGR gas by an amount equal to the amount of low pressure EGR gas that has been decreased due to the full closure of the low pressure EGR valve 32, thus making it possible to ensure a constant total amount of EGR gas.

In step S106 shifted from step S105, the ECU 15 determines whether the idle operation continuation time t continues for the period of time T2 or more (t ≧ T2 ?).

Here, the period of time T2 is an idle operation continuation time which is longer than the period of time T1, and for which or more if the idle operation is continued, the temperature of the combustion chambers will be lowered to such an extent as to cause the trouble that the recirculating high pressure EGR gas discharges HC from the internal combustion engine 1, and/or lowers the catalyst bed temperature of the filter 11, and it is a period of time determined in advance by experiments or the like. In other words, the period of time T2 is a second predetermined time of the present invention.

When a negative determination is made in step S106, the ECU 15 shifts to step S102, whereas when a positive determination is made, the ECU 15 shifts to step S107.

In step S107, the ECU 15 controls the high pressure EGR valve 42 into a fully closed state.

By controlling the high pressure EGR valve 42 into the fully closed state, the amount of high pressure EGR gas is reduced in the idle operation after the period of time T2, so the exhaust gas having fallen in temperature due to the continuation of the idle operation for a longer period of time is made not to be recirculated as a high pressure EGR gas, thereby making it possible to suppress the reduction in the temperature of the combustion chambers.

As described above, by controlling the low pressure EGR valve 32 and the high pressure EGR valve 42 at the time of continuation of the idle operation, it is possible to suppress the fall of the temperature of the combustion chambers even if the idle operation continuation time continues for a long period of time, so the trouble of discharging HC from the internal combustion engine 1, or of lowering the catalyst bed temperature of the filter 11 resulting from the fall of the temperature of the combustion chambers can be suppressed.

### < Second Embodiment >

In the following, reference will be made to a second embodiment of the present invention, in which only what is different from the above-mentioned first embodiment will be described while omitting the explanation of the same or like component parts.

The main cause for lowering the temperature of the combustion chambers is that the temperature of the low pressure EGR gas in the intake air sucked into the internal combustion engine 1 falls. Accordingly, in this second embodiment, the low pressure EGR valve 32 is controlled to the closing side in accordance with the lowering temperature Te of the low pressure EGR gas detected by the low pressure EGR gas temperature sensor 34 shown in Fig. 1.

Thus, according to this second embodiment, the low pressure EGR valve 32 is controlled to the closing side in accordance with the lowering of the low pressure EGR gas temperature, so the amount of low pressure EGR gas is reduced in accordance with the lowering of the low pressure EGR gas temperature, thereby making it possible to suppress the temperature fall of the combustion chambers.

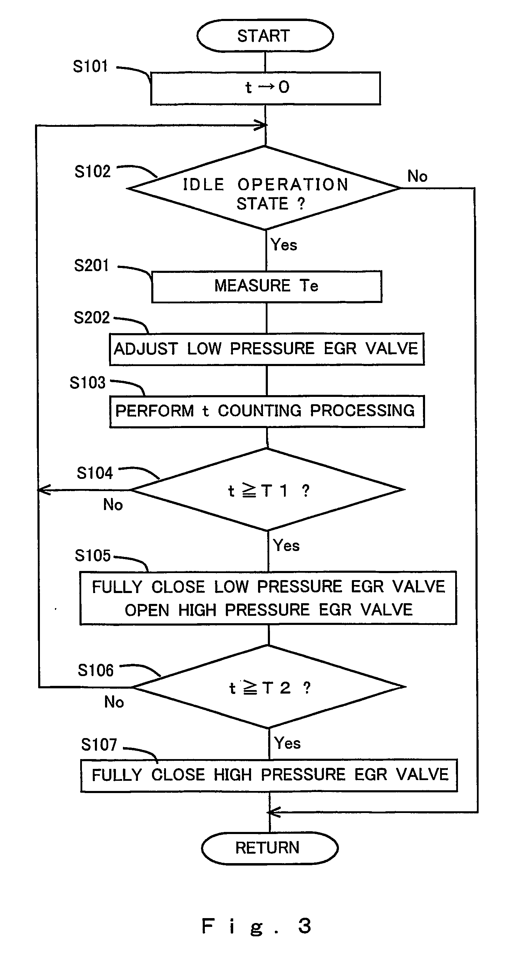

Now, reference will be made to a control flow for the low pressure EGR valve 32 and the high pressure EGR valve 42 at the time of continuation of an idle operation according to the second embodiment of the present invention. Fig. 3 is a flow chart that shows a control routine for the low pressure EGR valve 32 and the high pressure EGR valve 42 during continuation of the idle operation according to this second embodiment This routine is repeatedly carried out at every predetermined time interval. In addition, this routine corresponds to a control unit of the present invention.

Here, steps S101 through S107 of a control flow shown in Fig. 3 is similar to those of the above-mentioned first embodiment.

When a negative determination is made in step S102, the ECU 15 once terminates the execution of this routine, whereas when a positive determination is made, the ECU 15 shifts to step S201.

In step S201, the ECU 15 reads the low pressure EGR gas temperature Te in the form of an output value of the low pressure EGR gas temperature sensor 34.

In step S202 shifted from step S201, the ECU 15 controls the low pressure EGR valve 32 to the closing side in accordance with the lowering degree of the low pressure EGR gas temperature Te.

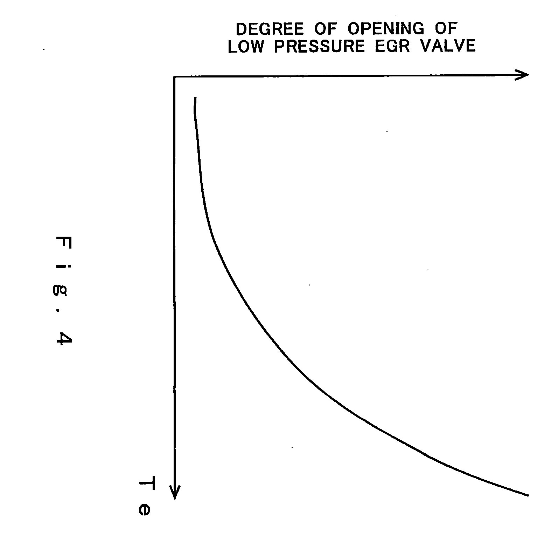

Here, the degree of opening of the low pressure EGR valve 32 set to the closing side is calculated by assigning the low pressure EGR gas temperature Te read in step S201 to a map of the low pressure EGR gas temperature Te and the degree of opening of the low pressure EGR valve 32, which is determined in advance by experiments, etc., as shown in Fig. 4.

By controlling the low pressure EGR valve 32 to the closing side, the amount of low pressure EGR gas is reduced in accordance with the lowering of the low pressure EGR gas temperature, thereby making it possible to suppress the temperature fall of the combustion chambers.

The control flow shifts from step S202 to step S103.

As described above, by controlling the low pressure EGR valve 32 and the high pressure EGR valve 42 at the time of continuation of the idle operation, it is possible to suppress the temperature fall of the combustion chambers in consideration of the lowering of the low pressure EGR gas temperature Te, so the trouble of discharging HC from the internal combustion engine 1, or of lowering the catalyst bed temperature of the filter 11 resulting from the fall of the temperature of the combustion chambers can be suppressed.

### < Third Embodiment >

In the following, reference will be made to a third embodiment of the present invention, in which only what is different from the above-mentioned first embodiment will be described while omitting the explanation of the same or like component parts.

The main cause for lowering the temperature of the combustion chambers is that the temperature of the low pressure EGR gas in the intake air sucked into the internal combustion engine 1 falls. Accordingly, in this embodiment, the low pressure EGR valve 32 is controlled to the closing side in accordance with the lowering temperature Ta of the ambient atmosphere detected by the ambient temperature sensor 8 shown in Fig. 1.

Thus, according to this third embodiment, the low pressure EGR valve 32 is controlled to the closing side in accordance with the lowering of the ambient atmospheric temperature Ta, so the amount of low pressure EGR gas of low temperature is reduced in accordance with the lowering of the temperature of the ambient atmosphere to be sucked, thereby making it possible to suppress the temperature fall of the combustion chambers.

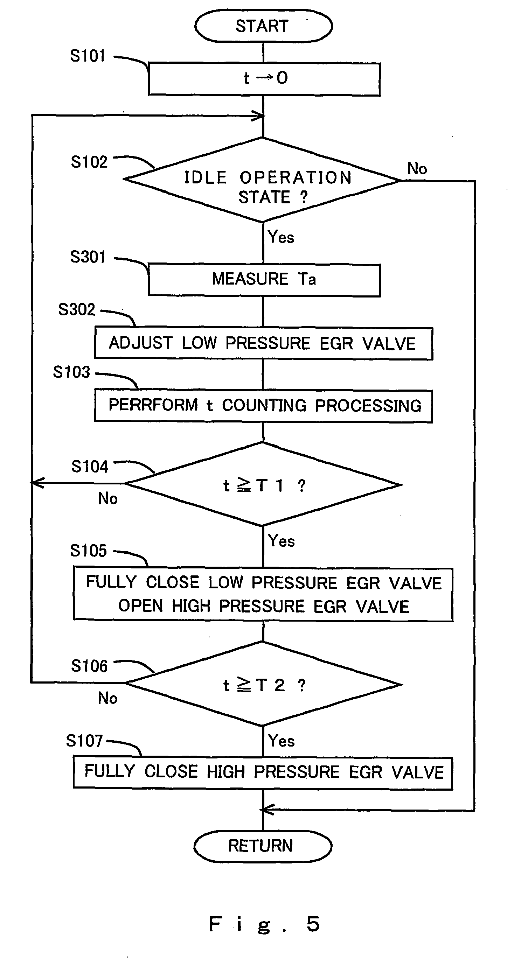

Now, reference will be made to a control flow for the low pressure EGR valve 32 and the high pressure EGR valve 42 at the time of continuation of an idle operation according to the third embodiment of the present invention. Fig. 5 is a flow chart that shows a control routine for the low pressure EGR valve 32 and the high pressure EGR valve 42 during continuation of the idle operation according to this third embodiment. This routine is repeatedly carried out at every predetermined time interval. In addition, this routine corresponds to a control unit of the present invention.

Here, steps S101 through S107 of a control flow shown in Fig. 5 is similar to those of the above-mentioned first embodiment.

When a negative determination is made in step S102, the ECU 15 once terminates the execution of this routine, whereas when a positive determination is made, the ECU 15 shifts to step S301.

In step S301, the ECU 15 reads the ambient atmospheric temperature Ta in the form of an output value of the ambient temperature sensor 8.

In step S302 shifted from step S301, the ECU 15 controls the low pressure EGR valve 32 to the closing side in accordance with the lowering degree of the ambient atmospheric temperature Ta.

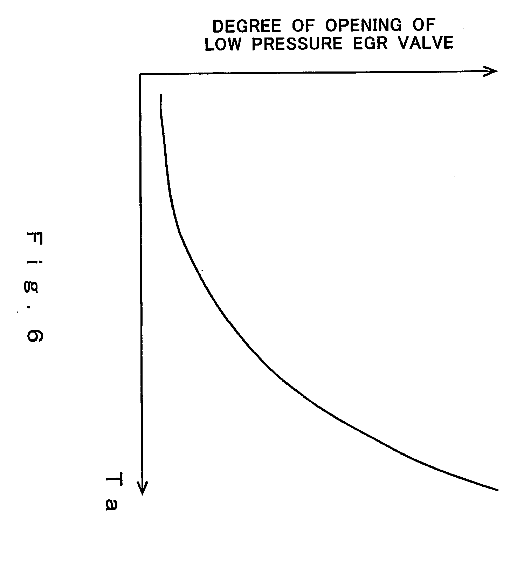

Here, the degree of opening of the low pressure EGR valve 32 set to the closing side is calculated by assigning the ambient atmospheric temperature Te read in step S301 to a map of the ambient atmospheric temperature Ta and the degree of opening of the low pressure EGR valve 32, which is determined in advance by experiments, etc., as shown in Fig. 6.

By controlling the low pressure EGR valve 32 to the closing side, the amount of iow pressure EGR gas of low temperature is reduced in accordance with the lowering of the ambient atmospheric temperature Ta, thereby making it possible to suppress the temperature fall of the combustion chambers.

The control flow shifts from step S302 to step S103.

As described above, by controlling the low pressure EGR valve 32 and the high pressure EGR valve 42 at the time of continuation of the idle operation, it is possible to suppress the temperature fall of the combustion chambers in consideration of the reduction of the ambient atmospheric temperature Ta, so the trouble of discharging HC from the internal combustion engine 1, or of lowering the catalyst bed temperature of the filter 11 resulting from the fall of the temperature of the combustion chambers can be suppressed.

### < Fourth Embodiment >

In the following, reference will be made to a fourth embodiment of the present invention, in which only what is different from the above-mentioned first embodiment will be described while omitting the explanation of the same or like component parts.

The main cause for lowering the temperature of the combustion chambers is that the temperature of the low pressure EGR gas in the intake air sucked into the internal combustion engine 1 falls. Accordingly, in this embodiment, the low pressure EGR valve 32 is controlled to the closing side in accordance with the lowering of the catalyst bed temperature Tc of the filter 11 that is obtained from a temperature difference detected from the first and second exhaust gas temperature sensors 12, 13 shown in Fig. 1.

Thus, according to this fourth embodiment, the low pressure EGR valve 32 is controlled to the closing side in accordance with the lowering of the catalyst bed temperature Tc of the filter 11, so the amount of low pressure EGR gas of low temperature is reduced in accordance with the lowering of the catalyst bed temperature Tc of the filter 11, thereby making it possible to suppress the temperature fall of the combustion chambers.

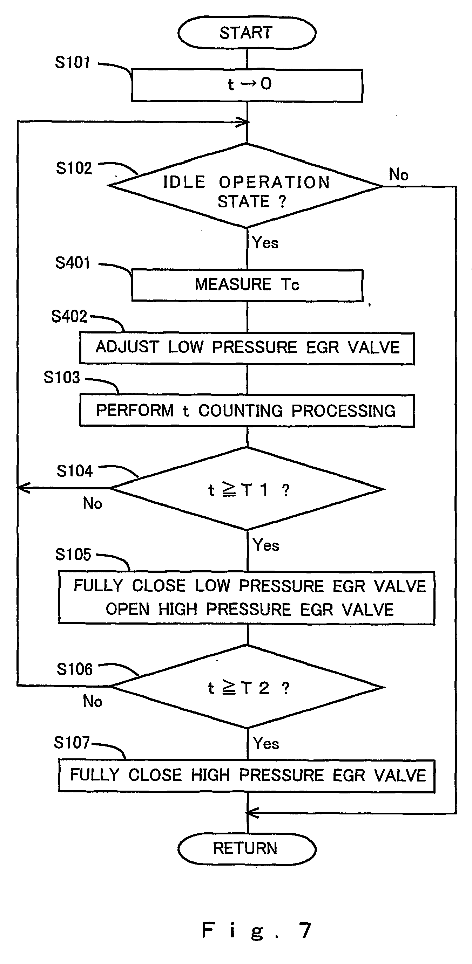

Now, reference will be made to a control flow for the low pressure EGR valve 32 and the high pressure EGR valve 42 at the time of continuation of an idle operation according to the fourth embodiment of the present invention. Fig. 7 is a flow chart that shows a control routine for the low pressure EGR valve 32 and the high pressure EGR valve 42 during continuation of the idle operation according to this fourth embodiment. This routine is repeatedly carried out at every predetermined time interval. In addition, this routine corresponds to a control unit of the present invention.

Here, steps S101 through S107 of a control flow shown in Fig. 7 is similar to those of the above-mentioned first embodiment.

When a negative determination is made in step S102, the ECU 15 once terminates the execution of this routine, whereas when a positive determination is made, the ECU 15 shifts to step S401.

In step S401, the ECU 15 reads the catalyst bed temperature Tc of the filter 11 obtained from the output values of the first and second exhaust gas temperature sensors 12, 13.

In step S402 shifted from step S401, the ECU 15 controls the low pressure EGR valve 32 to the closing side in accordance with the lowering of the catalyst bed temperature Tc of the filter 11.

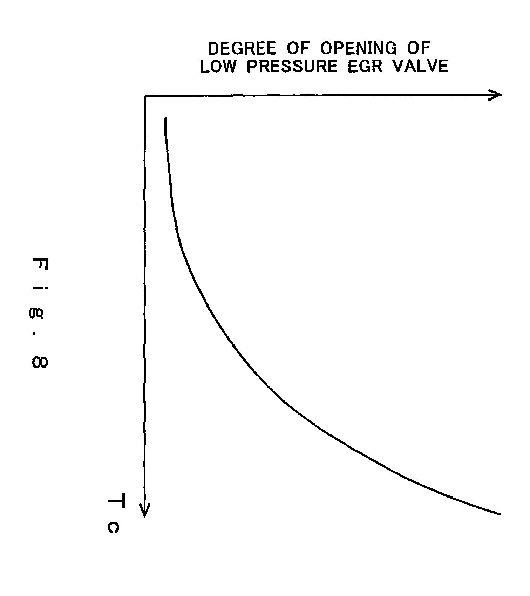

Here, the degree of opening of the low pressure EGR valve 32 set to the closing side is calculated by assigning the catalyst bed temperature Tc of the filter 11 read in step S401 to a map of the catalyst bed temperature Tc of the filter 11 and the degree of opening of the low pressure EGR valve 32, which is determined in advance by experiments, etc., as shown in Fig. 8.

By controlling the low pressure EGR valve 32 to the closing side, the amount of low pressure EGR gas of low temperature is reduced in accordance with the lowering of the catalyst bed temperature Tc of the filter 11, thereby making it possible to suppress the temperature fall of the combustion chambers.

The control flow shifts from step S402 to step S103.

As described above, by controlling the low pressure EGR valve 32 and the high pressure EGR valve 42 at the time of continuation of the idle operation, it is possible to suppress the temperature fall of the combustion chambers in consideration of the lowering of the catalyst bed temperature Tc of the filter 11, so the trouble of discharging HC from the internal combustion engine 1, or of lowering the catalyst bed temperature Tc of the filter 11 resulting from the fall of the temperature of the combustion chambers can be suppressed.

An exhaust gas recirculation apparatus for an internal combustion engine according to the present invention is not limited to the above-mentioned embodiments, but various changes may be made therein in the range not departing from the spirit of the present invention.

While the invention has been described in terms of preferred embodiments, those skilled in the art will recognize that the invention can be practiced with modifications within the scope of the appended claims.

### INDUSTRIAL APPLICABILITY

According to the present invention, in the exhaust gas recirculation apparatus for an internal combustion engine, it is possible to suppress the lowering of the temperature of the combustion chambers even if the idle operation continuation time continues for a long period of time, and hence it is possible to suppress trouble resulting from the lowering of the temperature of the combustion chambers.

## Claims

1. An exhaust gas recirculation apparatus for an internal combustion engine (1) comprising:
a turbocharger (5) that has a turbine ( 5 b ) arranged on an exhaust passage (4) of said internal combustion engine (1) and a compressor (5a) arranged on an intake passage (3) of said internal combustion engine (1);
a low pressure EGR passage (31) that takes in a part of an exhaust gas from said exhaust passage (4) at a location downstream of said turbine (5b), and recirculates it to said intake passage (3) at a location upstream of said compressor (5a);
a high pressure EGR passage (41) that takes in a part of the exhaust gas from said exhaust passage (4) at a location upstream of said turbine (5b) and recirculates it to said intake passage (3) at a location downstream of said compressor (5a);
a low pressure EGR valve (32) that is arranged on said low pressure EGR passage (31), and controls an amount of exhaust gas passing through said low pressure EGR passage (31);
a high pressure EGR valve (42) that is arranged on said high pressure EGR passage (41), and controls an amount of exhaust gas passing through said high pressure EGR passage (41);
said exhaust gas recirculation apparatus being **characterized in that** it further comprises:
an idle operation continuation time counting unit (15) that counts an idle operation continuation time of said internal combustion engine (1); and
a control unit (15) that controls said low pressure EGR valve (32) to a closing side and said high pressure EGR valve (42) to an opening side when said idle operation continuation time calculated by said idle operation continuation time counting unit (15) continues a first predetermined period of time or more.

2. The exhaust gas recirculation apparatus for an internal combustion engine (1) according to claim 1, **characterized in that** said control unit (15) controls said high pressure EGR valve (42) to the closing side when said idle operation continuation time continues for a second predetermined period of time or more that is longer than said first predetermined period of time.

3. The exhaust gas recirculation apparatus for an internal combustion engine (1) according to claim 1 or 2, **characterized by** further comprising:
a low pressure EGR gas temperature detection unit (34) that detects the temperature of an exhaust gas passing through said low pressure EGR passage (31);
wherein said control unit (15) controls said low pressure EGR valve (32) to the closing side in accordance with the lowering of the temperature of the exhaust gas passing through said low pressure EGR passage (31) that is detected by said low pressure EGR gas temperature detection unit (34).

4. The exhaust gas recirculation apparatus for an internal combustion engine (1) according to claim 1 or 2, **characterized by** further comprising:
an ambient temperature detection unit (8) that detects the temperature of ambient atmosphere;
wherein said control unit (15) controls said low pressure EGR valve (32) to the closing side in accordance with the lowering of the ambient atmospheric temperature that is detected by said ambient temperature detection unit (8).

5. The exhaust gas recirculation apparatus for an internal combustion engine (1) according to claim 1 or 2, **characterized by** further comprising:
an exhaust gas purification catalyst (11) that is arranged on said exhaust passage (4) at a location downstream of said turbine (5b) and upstream of a joint portion thereof with said low pressure EGR passage (31) for purifying the exhaust gas; and
a catalyst bed temperature detection unit (12,13) that detects the catalyst bed temperature of said exhaust gas purification catalyst (11);
wherein said control unit (15) controls said low pressure EGR valve (32) to the closing side in accordance with the lowering of the catalyst bed temperature of said exhaust gas purification catalyst (11) that is detected by said catalyst bed temperature detection unit (12,13).

## Patentansprüche

1. Abgasrückführungsvorrichtung für eine Verbrennungskraftmaschine (1), umfassend:
einen Turbolader (5), der eine in einem Absaugkanal (4) der Verbrennungskraftmaschine (1) angeordnete Turbine (5b) und einen in einem Ansaugkanal (3) der Verbrennungskraftmaschine (1) angeordneten Verdichter (5a) aufweist,
einen AGR-Niederdruckkanal (31), der einen Teil eines Abgases aus dem Absaugkanal (4) an einer Stelle stromab der Turbine (5b) ansaugt und diesen an einer Stelle stromauf des Verdichters (5a) in den Ansaugkanal (3) zurückführt,
einen AGR-Hochdruckkanal (41), der einen Teil des Abgases aus dem Absaugkanal (4) an einer Stelle stromauf der Turbine (5b) ansaugt und diesen an einer Stelle stromab des Verdichters (5a) in den Ansaugkanal (3) zurückführt,
ein AGR-Niederdruckventil (32), das in dem AGR-Niederdruckkanal (31) angeordnet ist und eine Abgasmenge steuert, die den AGR-Niederdruckkanal (31) durchströmt,
ein AGR-Hochdruckventil (42), das in dem AGR-Hochdruckkanal (41) angeordnet ist und eine Abgasmenge steuert, die den AGR-Hochdruckkanal (41) durchströmt,
wobei die Abgasrückführungsvorrichtung **dadurch gekennzeichnet ist, daß** sie außerdem umfaßt:
eine Leerlauffortsetzungszeit-Zähleinheit (15), die eine Leerlauffortsetzungszeit der Verbrennungskraftmaschine (1) zählt, und
eine Steuereinheit, die das AGR-Niederdruckventil (32) zu einer Schließseite und das AGR-Hochdruckventil (42) zu einer Öffnungsseite steuert, wenn sich die von der Leerlauffortsetzungszeit-Zähleinheit (15) berechnete Leerlauffortsetzungszeit über einen ersten vorgegebenen Zeitraum oder einen längeren fortsetzt.

2. Abgasrückführungsvorrichtung für eine Verbrennungskraftmaschine (1) nach Anspruch 1, **dadurch gekennzeichnet, daß** die Steuereinheit (15) das AGR-Hochdruckventil (42) zu der Schließseite steuert, wenn sich die Leerlauffortsetzungszeit über einen zweiten vorgegebenen Zeitraum oder einen längeren fortsetzt, der länger als der erste vorgegebene Zeitraum ist.

3. Abgasrückführungsvorrichtung für eine Verbrennungskraftmaschine (1) nach Anspruch 1 oder 2, **dadurch gekennzeichnet, daß** sie außerdem umfaßt:
eine AGR-Niederdruckgastemperatur-Detektierungseinheit (34), die die Temperatur eines den AGR-Niederdruckkanal (31) durchströmenden Abgases erfaßt,
wobei die Steuereinheit (15) das AGR-Niederdruckventil (32) gemäß dem Absinken der Temperatur des den AGR-Niederdruckkanal (31) durchströmenden Abgases, die von der AGR-Niederdruckgastemperatur-Detektierungseinheit (34) erfaßt wird, zu der Schließseite steuert.

4. Abgasrückführungsvorrichtung für eine Verbrennungskraftmaschine (1) nach Anspruch 1 oder 2, **dadurch gekennzeichnet, daß** sie außerdem umfaßt:
eine Umgebungstemperatur-Detektierungseinheit (8), die die Temperatur der umgebenden Atmosphäre erfaßt,
wobei die Steuereinheit (15) das AGR-Niederdruckventil (32) gemäß dem Absinken der Temperatur der umgebenden Atmosphäre, die von der Umgebungstemperatur-Detektierungseinheit (8) erfaßt wird, zu der Schließseite steuert.

5. Abgasrückführungsvorrichtung für eine Verbrennungskraftmaschine (1) nach Anspruch 1 oder 2, **dadurch gekennzeichnet, daß** sie außerdem umfaßt:
einen Abgasreinigungskatalysator (11), der an einer Stelle stromab der Turbine (5b) und stromauf eines gemeinsamen Abschnitts derselben mit dem AGR-Niederdruckkanal (31) zum Reinigen des Abgases in dem Abgaskanal (4) angeordnet ist, und
eine Katalysatorbettemperatur-Detektierungseinheit (12, 13), die die Katalysatorbettemperatur des Abgasreinigungskatalysators (11) erfaßt,
wobei die Steuereinheit (15) das AGR-Niederdruckventil (32) gemäß dem Absinken der Katalysatorbettemperatur des Abgasreinigungskatalysators (11), die von der Katalysatorbettemperatur-Detektierungseinheit (12, 13) erfaßt wird, zu der Schließseite steuert.

## Revendications

1. Dispositif de recirculation de gaz d'échappement pour un moteur à combustion interne (1) comprenant :
un turbocompresseur (5) qui comprend une turbine (5b) agencée sur un passage d'échappement (4) dudit moteur à combustion interne (1) et un compresseur (5a) agencé sur un passage d'admission (3) dudit moteur à combustion interne (1) ;
un passage de RGE basse pression (31) qui prend une partie d'un gaz d'échappement depuis ledit passage d'échappement (4) en un emplacement en aval de ladite turbine (5b), et le remet en circulation vers ledit passage d'admission (3) en un emplacement en amont dudit compresseur (5a) ;
un passage de RGE haute pression (41) qui prend une partie du gaz d'échappement depuis ledit passage d'échappement (4) en un emplacement en amont de ladite turbine (5b), et le remet en circulation vers ledit passage d'admission (3) en un emplacement en aval dudit compresseur (5a) ;
une soupape de RGE basse pression (32) qui est agencée sur ledit passage de RGE basse pression (31), et commande une quantité de gaz d'échappement passant à travers ledit passage de RGE basse pression (31) ;
une soupape de RGE haute pression (42) qui est agencée sur ledit passage de RGE haute pression (41), et commande une quantité de gaz d'échappement passant à travers ledit passage de RGE haute pression (41) ;
ledit dispositif de recirculation de gaz d'échappement étant **caractérisé en ce qu'**il comprend en outre :
une unité de comptage de temps de maintien de fonctionnement au ralenti (15) qui compte un temps de maintien de fonctionnement au ralenti dudit moteur à combustion interne (1) ; et
une unité de commande (15) qui commande ladite soupape de RGE basse pression (32) vers une côté fermeture et ladite soupape de RGE haute pression (42) vers un côté ouverture quand ledit temps de maintien de fonctionnement au ralenti calculé par ladite unité de comptage de temps de maintien de fonctionnement au ralenti (15) continue durant une première période prédéterminée de temps ou plus.

2. Dispositif de recirculation de gaz d'échappement pour un moteur à combustion interne (1) selon la revendication 1, **caractérisé en ce que** ladite unité de commande (15) commande ladite soupape de RGE haute pression (42) vers le côté de fermeture quand ledit temps de maintien de fonctionnement au ralenti continue durant une seconde période de temps prédéterminée ou plus qui est plus longue que ladite première période de temps prédéterminée.

3. Dispositif de recirculation de gaz d'échappement pour un moteur à combustion interne (1) selon la revendication 1 ou 2, **caractérisé en ce qu'**il comprend en outre :
une unité de détection de température de gaz de RGE basse pression (34) qui détecte la température d'un gaz d'échappement passant à travers ledit passage de RGE basse pression (31) ;
dans lequel ladite unité de commande (15) commande ladite soupape de RGE basse pression (32) vers le côté de fermeture selon l'abaissement de la température du gaz d'échappement passant à travers ledit passage de RGE basse pression (31) qui est détectée par ladite unité de détection de température de gaz de RGE basse pression (34).

4. Dispositif de recirculation de gaz d'échappement pour un moteur à combustion interne (1) selon la revendication 1 ou 2, **caractérisé en ce qu'**il comprend en outre :
une unité de détection de température ambiante (8) qui détecte la température de l'atmosphère ambiante ;
dans lequel ladite unité de commande (15) commande ladite soupape de RGE basse pression (32) vers le côté de fermeture selon l'abaissement de la température atmosphérique ambiante qui est détectée par ladite unité de détection de température ambiante (8).

5. Dispositif de recirculation de gaz d'échappement pour un moteur à combustion interne (1) selon la revendication 1 ou 2, **caractérisé en ce qu'**il comprend en outre :
un catalyseur de purification de gaz d'échappement (11) qui est agencé sur ledit passage d'échappement (4) en un emplacement en aval de ladite turbine (5b) et en amont d'une partie de jonction de celle-ci avec ledit passage de RGE basse pression (31) pour purifier le gaz d'échappement ; et
une unité de détection de température de lit catalytique (12, 13) qui détecte la température de lit catalytique dudit catalyseur de purification de gaz d'échappement (11) ;
dans lequel ladite unité de commande (15) commande ladite soupape de RGE basse pression (32) vers le côté de fermeture selon l'abaissement de la température de lit catalytique dudit catalyseur de purification de gaz d'échappement (11) qui est détectée par ladite unité de détection de température de lit catalytique (12, 13).
